# EUROPÄISCHE PATENTANMELDUNG

(11) **EP 1 743 857 A1**
(43) Veröffentlichungstag der Anmeldung: **17.01.2007**
(21) Anmeldenummer: 06014749.3
(22) Anmeldetag: 14.07.2006
(51) Int. Cl.: B65G 67/20

(54) **Vorrichtung und Verfahren zum Be- und Entladen von Transportgut sowie eine Ablageführung hierfür**

(30) Priorität: 16.07.2005 DE 102005033289
(71) Anmelder: Stöhr, Wolfgang, 55606 Kirn (DE)
(72) Erfinder: Stöhr, Wolfgang, 55606 Kirn (DE)
(74) Vertreter: Becker, Bernd

(57) **Zusammenfassung**

Eine Vorrichtung zum Be- und Entladen von Transportgut (2), insbesondere auf Euro-Paletten (3), in und aus einem Laderaum (4), insbesondere von einem Container (15) oder einem Nutzfahrzeug (5), umfasst mindestens eine hohle Ablageführung (6) zur Ablage von Transportgut (2) und zur Führung einer Fördereinrichtung darin sowie einen unter der Fördereinrichtung in der Ablageführung (6) angeordneten Schlauch (13), der unter einer Fluidbeaufschlagung die Fördereinrichtung aus einer Ablageposition in eine Förderposition zum Fördern des Transportgutes (2) hebt, wodurch die Fördereinrichtung aus einer mittigen Öffnung der Ablageführung (6) herausragt. Die Fördereinrichtung ist eine endliche Förderkette (12) und es ist ein Förderkettenantrieb (25) vorgesehen, der die Förderkette (12) aus einem Magazin (11) zum Be- und Entladen in die Ablageführung (6) hinein- und herausführt.

## Beschreibung

Die Erfindung bezieht sich auf eine Vorrichtung zum Be- und Entladen von Transportgut, insbesondere auf Euro-Paletten, in und aus einem Laderaum, insbesondere von einem Container oder einem Nutzfahrzeug, mit mindestens einer hohlen Ablageführung zur Ablage von Transportgut und zur Führung einer Fördereinrichtung darin sowie mit einem unter der Fördereinrichtung in der Ablageführung angeordneten Schlauch, der unter einer Fluidbeaufschlagung die Fördereinrichtung aus einer Ablageposition in eine Förderposition zum Fördern des Transportgutes hebt, wodurch die Fördereinrichtung aus einer mittigen Öffnung der Ablageführung herausragt.

Weiterhin bezieht sich die Erfindung auf ein Verfahren zum Be- und Entladen von Transportgut, insbesondere auf Euro-Paletten in und aus einem Laderaum, insbesondere von Containern und Nutzfahrzeugen, wobei eine Fördereinrichtung durch Fluidbeaufschlagung eines unter der Fördereinrichtung angeordneten Schlauchs gehoben wird, um das Transportgut zu fördern.

Ferner bezieht sich die Erfindung auf eine Ablageführung für Laderäume, insbesondere von Containern, Nutzfahrzeugen oder für die Vorrichtung der eingangs genannten Art, mit einem in der Ablageführung angeordneten Schlauch und einer darauf liegenden Gleitschiene zum Führen der Fördereinrichtung.

Vorrichtungen zum Be- oder Entladen von Fahrzeugen sind seit vielen Jahren in verschiedenen Variationen bekannt. Beispielsweise beschreibt die DE 38 32 464 A1 eine auf dem Ladeboden eines Fahrzeugs fest montierte Vorrichtung zum Be- oder Entladen von Fahrzeugen, insbesondere Sattelschleppern mit Ladeeinheiten, insbesondere Paletten, Gitterboxen und ähnlichen Behältern. Die Vorrichtung weist umlaufend angetriebene Endlosketten und insbesondere pneumatische heb- und senkbare Stütz- und Förderglieder auf. Pro Ladeeinheitsstrecke sind zwei mittels Druckluftbälgen pneumatisch heb- und senkbare Endlosketten vorgesehen, die als Stütz- und Förderglieder dienen.

Es ist Aufgabe der Erfindung, eine Vorrichtung zum Be- und Entladen von Transportgut der eingangs genannten Art zu schaffen, die möglichst einfach sowie preiswert aufgebaut ist und effizient arbeitet. Darüber hinaus ist es Aufgabe der Erfindung ein Verfahren der eingangs genannten Art zu schaffen, das einfach sowie zuverlässig abläuft und zudem die Logistikkosten senkt. Ferner ist es Aufgabe der Erfindung eine zuverlässig arbeitende Ablageführung bereitzustellen.

Erfindungsgemäß wird die Aufgabe dadurch gelöst, dass die Fördereinrichtung eine endliche Förderkette ist und ein Förderkettenantrieb vorgesehen ist, der die Förderkette aus einem Magazin zum Be- und Entladen in die Ablageführung hinein- und herausführt.

Der Kerngedanke der Erfindung liegt darin, die bisher auf dem Ladeboden fest angeordnete Förderkette mit dem dazu nötigen Förderantrieb herauszunehmen und an einer Verladerampe zu konzentrieren. Dies ist insofern vorteilhaft, als ein geringeres Transportgewicht beim Nutzfahrzeug erreicht wird, was sich auch auf den Kraftstoffverbrauch positiv auswirkt. Da der Förderantrieb auf dem Ladeboden nicht mehr erforderlich ist, sind die Herstellungskosten für das Nutzfahrzeug mit dem Ladeboden niedriger. Der Förderantrieb, der mit der Förderkette an der Verladerampe angeordnet ist, erzielt eine deutlich bessere Auslastung, da er rund um die Uhr für mehrere Laderäume von beispielsweise Sattelschleppern, Stahlwechselcontainer usw. für das Fördern von Transportgut eingesetzt werden kann. Es ist also nicht mehr notwendig, einen Förderantrieb über lange Fahrtwege mitzuführen und diesen lediglich für das Be- und Entladen einer einzigen Ladefläche zu verwenden. Des Weiteren entfällt die Anordnung elektrischer/elektronischer Steuereinrichtungen auf dem Nutzfahrzeug bzw. in dem Container oder dergleichen. Selbstverständlich bezieht sich die Erfindung nicht nur auf das Verladen von Euro-Paletten, sondern umfasst sämtliche palettenförmigen Unterlagen, insbesondere Chemie-Paletten. Der Förderantrieb bzw. die Fördereinrichtung können sowohl stationär als auch mobil an einem Ladeplatz vorgesehen sein. Bei einem hohen Durchsatz von Transportgut ist eine stationäre Lösung zu bevorzugen, da ein Verfahren der Fördereinrichtung entfällt.

Um die Reibung der Förderkette zu reduzieren, weist bevorzugt die Förderkette Rollen auf, die auf Gleitschienen in der Ablageführung laufen, wobei zum Fördern des Transportguts mindestens ein zur Ablageseite hin exzentrisch angeordnetes Tragkettenverbindungsglied vorgesehen ist. Bei der Ausgestaltung der Förderkette ist es in Abhängigkeit von der Ausgestaltung des Traggliedes möglich, an einem Kettenglied ein, zwei oder mehr Tragglieder vorzusehen, auf denen die zu fördernde Last aufliegt. Zur Senkung des Gewichts ist die Förderkette vorzugsweise aus einem Kunststoff gefertigt.

Vorteilhafterweise ist die Vorrichtung als Flurförderfahrzeug auf Laufschienen ausgebildet, die quer zur Bewegungsrichtung der Förderkette angeordnet sind. Somit können mehrere Laderäume von Nutzfahrzeugen nebeneinander bedient werden. Außerdem kann das Flurförderfahrzeug das Transportgut zu einem Kettenförderer fahren, der das Transportgut zur weiteren Lagerung oder Bearbeitung in ein Gebäude einführt.

Um die Hubbewegung der Förderkette bei einem stationären ortsfesten Magazin in der Vorrichtung zum Be- und Entladen auszugleichen, ist eine Gleitschiene zur Führung der Förderkette als Weiche mit einer zur Antriebsachse des Antriebs der Förderkette parallelen, vertikal ausgerichteten Schwenkachse angeordnet. Die Hubbewegung wird durch eine Fluidbeaufschlagung des Schlauchs unter der Förderkette ausgeführt. Als Fluide können sowohl Flüssigkeiten als auch gasförmige Fluide, vorteilhafterweise Luft, zum Einsatz kommen.

In weiterer Ausgestaltung sind die Förderwalzen in Längsrichtung zur Förderrichtung der Förderkette angeordnet, um das Transportgut quer zur Förderrichtung der Förderkette zu fördern. Somit wird ein hoher Umschlagdurchsatz des Transportguts erzielt, da statt eines Fördersystems zwei oder drei Fördersysteme, teilweise sogar parallel, d.h. gleichzeitig, zusammenarbeiten können. Bei einer entsprechenden und aus dem Stand der Technik bekannten Automatisierung mit einer standardisierten Steuerschaltung, wie beispielsweise eine SPS-Schaltung, z.B. von Siemens S7, können Be- und Entladezeiten pro Stunde von ungefähr 1 bis 8 Sattelschleppern mit jeweils ungefähr 34 Euro-Paletten oder 1 bis 12 Nutzfahrzeuge oder Stahlwechselcontainer mit jeweils ungefähr 12 Euro-Paletten erzielt werden.

Zweckmäßigerweise ist eine Andockbrücke mit mindestens zwei Ablageführungen vorgesehen, die dazu dient, die Seiten-, Höhen- und Längenabweichungen des Laderaums, beispielsweise eines Nutzfahrzeugs, zur Vorrichtung zum Be- und Entladen auszugleichen und zu überbrücken.

Da der Eingangsbereich zum Laderaum aufgrund des Transportguts mit bis zu einigen Tonnen Gewicht belastet werden kann, ist es bei solchen Verladungen erforderlich, eine hydraulische Höhenpositionierungsvorrichtung an der Heckseite des Laderaums vorzusehen.

Vorzugsweise umfasst das Magazin eine Lagerschiene für die Förderkette, die unter Einschluss eines Radius von der Gleitschiene abgeht. In der Lagerschiene ist die Förderkette geschützt aufgenommen. Das Magazin kann oberhalb oder unterhalb der Ablageführung vorgesehen sein und die Größe des Radius, unter dem die Lagerschiene sich an die Gleitschiene anschließt, ist durch die konstruktive Ausgestaltung der Förderkette bestimmt.

Damit sich das Magazin nicht störend beim Be- bzw. Entladen auswirkt und die Ablageführung frei zugänglich ist, verläuft bevorzugt die Lagerschiene unterhalb der Gleitschiene und ist beabstandet zu dieser angeordnet. Um eine hinreichend lange Förderkette in dem Magazin unterzubringen, ist zweckmäßigerweise die Lagerschiene meanderförmig gebogen.

Erfindungsgemäß wird die Aufgabe hinsichtlich der Ablageführung dadurch gelöst, dass die Gleitschiene im Wesentlichen C-förmig ausgebildet ist. Der offene Abschnitt zeigt zur Tragseite hin. Somit wird die Förderkette in der Gleitschiene sicher zwangsgeführt, kann sich aus dieser konkaven Querschnittsform nicht herausbewegen und verhindert sonach einen fehlerhaften Betrieb. Die Gleitschiene ist aus einem Kunststoff, vorzugsweise Polyethylen, gefertigt, da dieser Werkstoff hohe Belastungen bei einer reibungsarmen Gleitbewegung ermöglicht. Ein konventioneller Laderaum kann mit der erfindungsgemäßen Ablageführung leicht aufgerüstet werden, so dass die erfindungsgemäße Vorrichtung zum Be- und Entladen bei dem aufgerüsteten Laderaum eingesetzt werden kann.

Ein neuer Boden für einen Laderaum mit mindestens zwei oder drei oben beschriebenen, parallel angeordneten Ablageführungen wird dadurch geschaffen, dass zwischen den Ablageführungen zur Oberkante der Ablageführungen fluchtend ausgerichtet ein Zwischenboden, insbesondere aus Holz, angeordnet ist. Demzufolge kann der Laderaum ohne Hindernisse aufgrund der Ablageführungen begangen oder befahren werden. Dies ist notwendig, da möglicherweise die erfindungsgemäße Vorrichtung zum Be- und Entladen nicht an allen Verladerampen zur Verfügung steht, so dass auf die konventionellen Ladevorrichtungen, wie Gabelstapler oder Hubwagen, zurückgegriffen werden muss. Insbesondere sind zwei oder drei parallel angeordnete Ablageführungen vorgesehen, wobei die Anzahl der Ablageführungen in Abhängigkeit von der Beladerichtung der Euro-Paletten in dem Laderaum ausgewählt wird.

Erfindungsgemäß wird die Aufgabe hinsichtlich des Verfahrens dadurch gelöst, dass das Transportgut auf der als endliche Förderkette ausgebildeten Fördereinrichtung in oder aus dem Laderaum hinein- oder herausgerollt wird, indem die Förderkette von einer Trommel als im Wesentlichen stationäres Magazin ab- bzw. aufgerollt wird. Es ergeben sich daraus die oben zur Vorrichtung aufgezeigten Vorteile.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles unter Bezugnahme auf die zugehörigen schematischen Zeichnungen näher erläutert. Es zeigt:
- Fig.1: eine Seitenansicht eines Nutzfahrzeugs mit einem Flurförderfahrzeug entsprechend der erfindungsgemäßen Vorrichtung,
- Fig.2: einen Querschnitt durch die Darstellung nach Fig.1 gemäß der Linie II-II,
- Fig.3: eine Draufsicht einer Verladerampe mit der erfindungsgemäßen Vorrichtung,
- Fig.4: einen Querschnitt durch eine Ablageführung der Vorrichtung nach Fig. 1,
- Fig.5: eine Seitenansicht eines Schlauchs der Ablageführung nach Fig. 4,
- Fig.6: eine Draufsicht des Schlauchs nach Fig. 5,
- Fig.7: eine geschnittene Seitenansicht im Bereich des Übergangs Flurförderfahrzeug, Andockbrücke und Laderaum,
- Fig.8: eine teilweise geschnittene Vorderansicht des Flurförderfahrzeugs,
- Fig.9: eine Seitenansicht des Flurförderfahrzeugs nach Fig. 8,
- Fig.10: eine Draufsicht des Flurförderfahrzeugs,
- Fig.11: eine aufgeschnittene Vorderansicht des Förderkettenantriebs des Flurförderfahrzeugs,
- Fig.12: eine Querschnittansicht des Förderkettenantriebs,
- Fig.13: eine Draufsicht des Förderkettenantriebs
- Fig.14: eine Draufsicht der Verladerampe mit der Vorrichtung nach Fig. 3 in einer alternativen Ausgestaltung,
- Fig.15: eine Schnittdarstellung des Flurförderfahrzeugs nach Fig. 8 in einer alternativen Ausgestaltung,
- Fig.16: eine Teil-Draufsicht auf das Flurförderfahrzeug nach einer zweiten alternativen Ausgestaltung,
- Fig.17: eine Teil-Draufsicht auf das Flurförderfahrzeug nach einer weiteren alternativen Ausgestaltung,
- Fig.18: einen Teilschnitt durch die Vorrichtung nach Fig. 1 in alternativer Ausgestaltung und
- Fig.19: eine Schnittdarstellung durch die Ablageführung in alternativer Ausführung gemäß der Linie XIX-XIX,

Bei der Vorrichtung 1 zum Be- und Entladen von Transportgut 2 auf Euro-Paletten 3 in und aus einem Laderaum 4 eines Nutzfahrzeugs 5 befindet sich das Transportgut 2 auf handelsüblichen Euro-Paletten 3 der Maße 800 x 1200 mm doppelreihig angeordnet, wobei die zwei Euro-Paletten 3 sich der Länge nach an der Breite des Laderaums 4 erstrecken. Die Euro-Paletten 3 liegen auf jeweils drei in Längsrichtung zum Laderaum 4 angeordneten, auf dem Hauptboden des Laderaums 4 befestigten Ablageführungen 6. Die Ablageflächen der Ablageführungen 6 haben vom Hauptboden eine Distanz von ungefähr 118 mm. Damit diese Ablageführungen 6 nicht hervorstehen, ist ein Zwischenboden 7 zwischen den Ablageführungen 6 bündig mit der Ablagefläche der Ablageführungen 6 eingelassen. Die Befestigung des Zwischenbodens 7 mit der Ablageführung 6 ist nicht dargestellt und in einer aus dem Stand der Technik bekannten Weise ausgeführt. Der Zwischenboden 7 ist aus Holz hergestellt und mit einem Gabelstapler oder Hubwagen befahrbar.

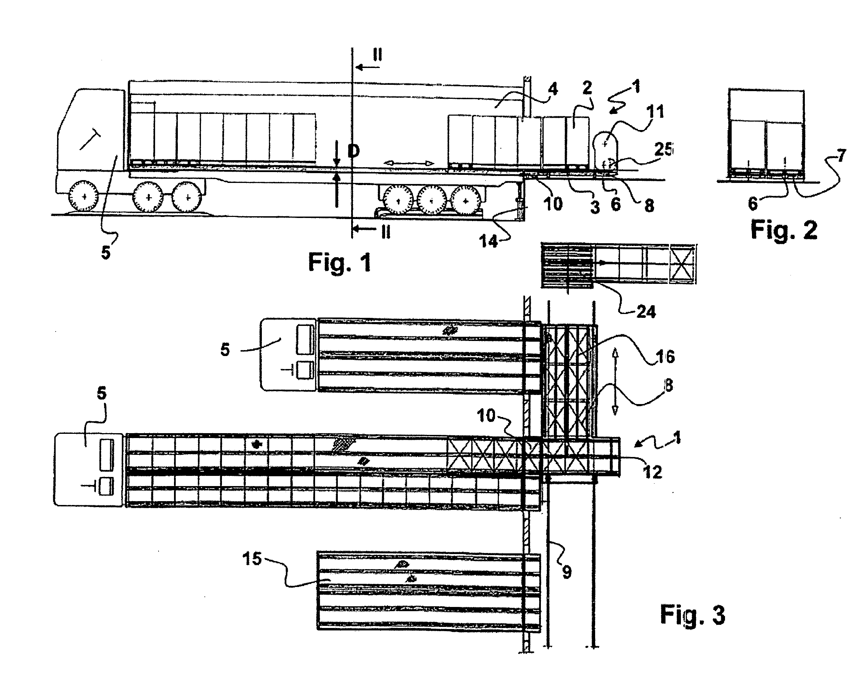

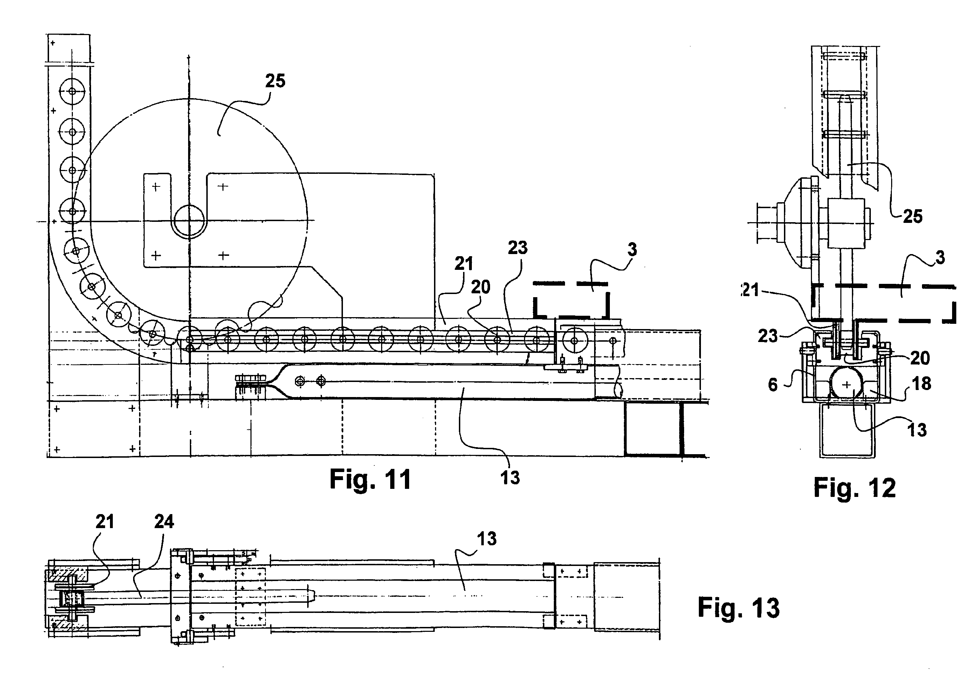

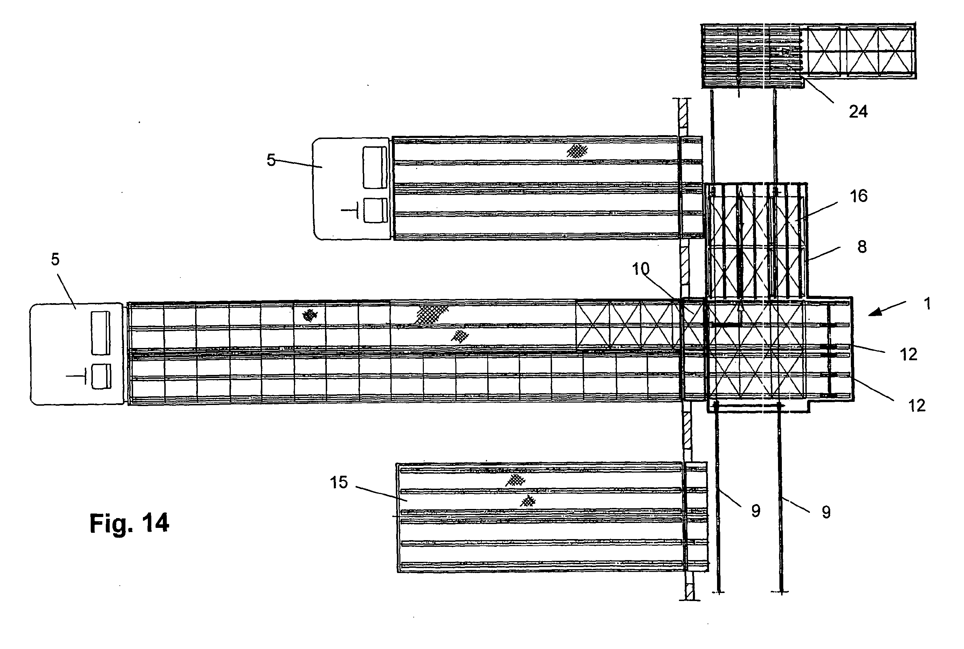

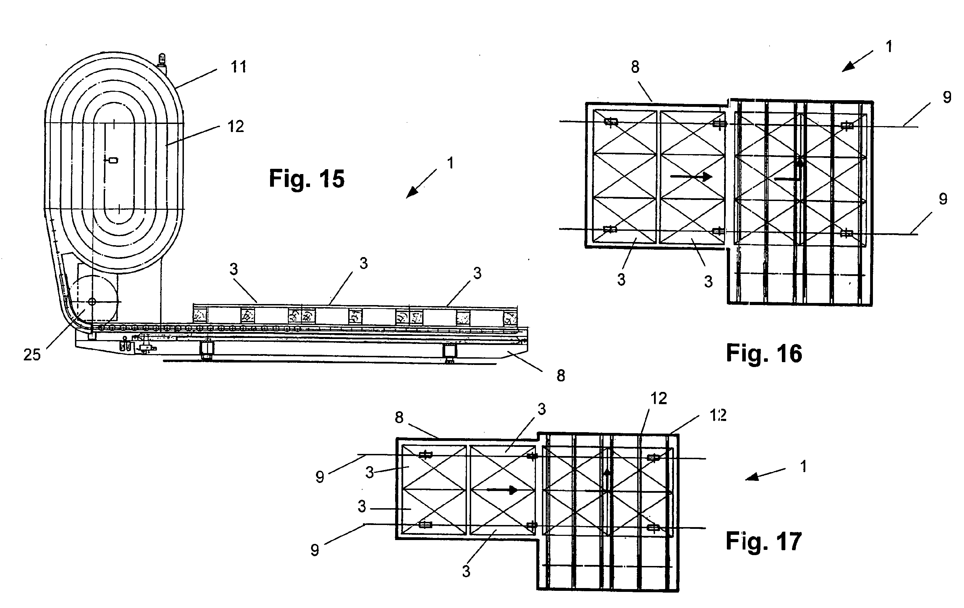

Die Vorrichtung 1 kann sowohl starr als auch als Flurförderfahrzeug 8 auf zwei Laufschienen 9 ausgebildet sein, wobei die Laufschienen 9 quer zur Förderrichtung am Rampenboden befestigt verlaufen. Das Flurförderfahrzeug 8 kann gemäß Fig. 3 und 17 in der Förderrichtung zwei Euro-Paletten 3 der Breite und nach Fig. 16 drei Euro-Paletten 3 der Länge nach aufnehmen. Zwischen dem Flurförderfahrzeug 8 und dem Nutzfahrzeug 5 befindet sich eine Andockbrücke 10, die zum Ausgleich zwischen den wechselnden Laderäumen 4 von Nutzfahrzeugen 5 und dem im Wesentlichen stationär angeordneten Flurförderfahrzeug 8 dient. Die Fortbewegung des Flurförderfahrzeugs 8 beschränkt sich auf den Verschiebeweg auf den Laufschienen 9. Ansonsten ist das Flurförderfahrzeug 8 ortsfest. Das Flurförderfahrzeug 8 hat auf der Seite, die der das Transportgut 2 aufnehmenden Seite gegenüberliegt, ein Magazin 11, in dem parallel angeordnete Förderketten 12 gelagert werden, wobei die maximale Länge der zu lagernden Förderketten 12 auch durch die Geometrie des Querschnittes des Magazins 11 bestimmt ist. Die Anzahl der parallel angeordneten Förderketten 12 beträgt drei oder sechs und zwar in Abhängigkeit von der Verladerichtung der Euro-Paletten 3 (Fig. 3, 14, 16 und 17). Auf diesen Förderketten 12 wird das Transportgut 2 auf den Euro-Paletten 3 in den Laderaum 4 des Nutzfahrzeugs 5 hineingerollt bzw. herausgerollt. Damit die Förderkette 12 unter die Euro-Paletten 3 gerollt werden kann bzw. unter diesen herausgerollt werden kann, existiert ein Hebemechanismus, der ein unter der Förderkette 12 angeordneter Schlauch 13 ist, der zum Anheben der Förderkette 12 mit Luft von ungefähr 5 bar beaufschlagt wird. Dieser Schlauch 13 befindet sich am Boden innenliegend von jeder Ablageführung 6. Sowohl das Flurförderfahrzeug 8 als auch die Andockbrücke 10 wie auch der Laderaum 4 sind gemäß Fig. 3 mit drei parallelen Ablageführungen 6 und gemäß den Fig. 14, 16 und 17 mit sechs parallelen Ablageführungen 6 ausgestattet, um eine Förderlinie für die Euro-Paletten 3 zu erzeugen. Die Fördereinrichtung, d.h. die Förderketten 12, bleibt immer auf der Rampe und verfährt wie eine "Zunge" mit den Euro-Paletten 3 auf drei bzw. sechs Förderketten 12 in oder aus dem wechselnden Laderaum 4. Die Vorrichtung 1 erreicht somit eine wirtschaftlich effiziente Auslastung. Wohingegen die Laderäume 4 einen minimalen Bauteilaufwand aufweisen.

Zur Verbesserung der Höhenpositionierung des Laderaums 4 zeigt Fig. 1 eine hydraulische Höhenpositionierungsvorrichtung 14, die direkt vor einer Rampe zum Be- und Entladen montiert ist. Die Höhenpositionierungsvorrichtung 14 ist mit zwei Hydraulikzylindern, einer Nachlaufsteuerung und einem Hydraulikaggregat von ungefähr 2,2 kW und einer Stahlkonstruktion zur Montage auf dem Rampenfundament oder verfahrbar vor der Verladerampe ausgeführt. Die hydraulische Höhenpositionierungsvorrichtung 14 ist wichtig, da die Euro-Paletten 3 mehrere Tonnen wiegen können.

An der Verladerampe mit dem auf Laufschienen 9 geführten Flurförderfahrzeug 8 sind gemäß Fig. 3 zwei Nutzfahrzeuge 5 und ein Stahlwechselcontainer 15 zum Be- und Entladen abgestellt. Vor den Ladeflächen 4 des Stahlwechselcontainers 15 und der Nutzfahrzeuge 5 befindet sich jeweils eine Andockbrücke 10. Das längere Nutzfahrzeug 5 kann maximal 17 Euro-Paletten pro Reihe laden.

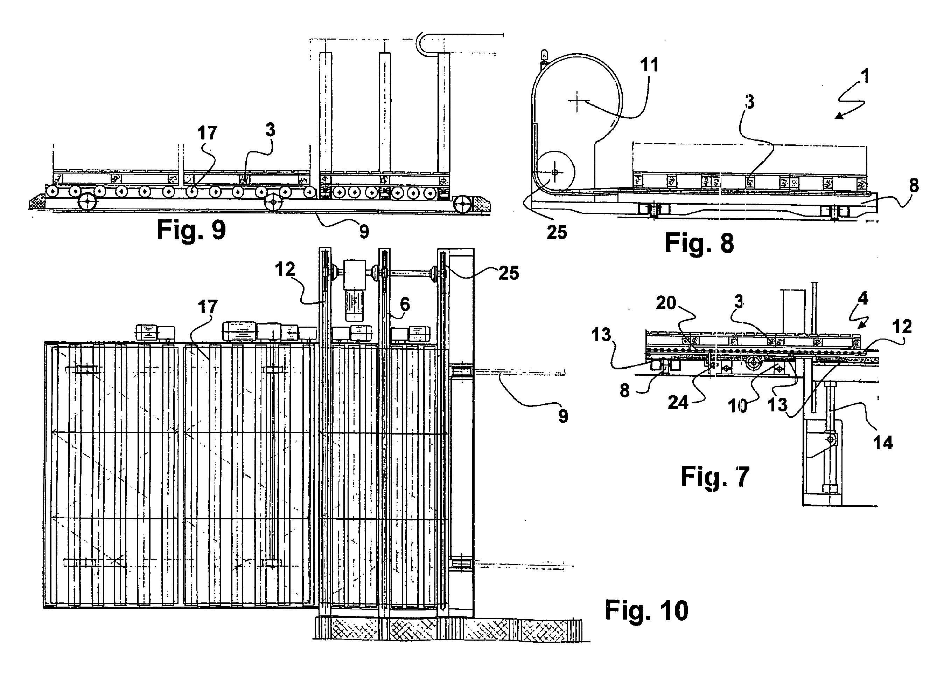

Das Flurförderfahrzeug 8 weist eine Förderfläche mit den Ablageführungen 6 von zwei oder drei Euro-Paletten 3 in der Breite auf. Daneben befindet sich eine Ladefläche 16 des Flurförderfahrzeugs 8, um eine größere Menge von Euro-Paletten 3 aufzunehmen, zwischenzulagern und nach einem kurzen Verfahrweg wieder abgeben zu können. Eine solche zusätzliche Ladefläche 16 erhöht den Umschlagdurchsatz beträchtlich, da nicht immer nach zwei oder drei auf das Förderfahrzeug 8 aufgeladenen Euro-Paletten 3 verfahren werden muß, sondern beispielsweise nach Fig. 10 erst nach acht aufgeladenen Euro-Paletten 3. Die Fig. 10 zeigt alternativ das Flurförderfahrzeug 8 mit neun zwischenlagerbaren Euro-Paletten 3. Dabei können die Ablageführungen 6 drei Euro-Paletten 3 in der Breite oder zwei Euro-Paletten 3 in der Länge aufnehmen. Die Ladefläche 16 des Flurförderfahrzeugs 8 kann, je nach Größe der Laderampe und baulichen Anforderungen, in der Aufnahmekapazität von Euro-Paletten 3 variieren. Die Laufschienen 9 für das Flurförderfahrzeug 8 haben eine Länge von 30 m. Die Euro-Paletten 3 auf der Ladefläche 16 des Flurförderfahrzeugs 8 können entweder in den Stahlwechselcontainer 15 oder in ein anderes Nutzfahrzeug 5 umgeladen oder zu einem Kettenförderer 24 mit Umsetzer transportiert werden, um die Euro-Paletten 3 mit dem Transportgut in einem Gebäude zu lagern oder weiter zu bearbeiten. Das Flurförderfahrzeug 8 weist Förderwalzen 17 in Längsrichtung zur Förderrichtung der Förderkette 12 auf, um die Euro-Paletten 3 auf die Ladefläche 16 des Flurförderfahrzeugs 8 zu transportieren. Eine Förderebene wird tangential von den Förderwalzen 17 gebildet, deren Niveau höher als die Ablagefläche der Ablageführungen 6, aber niedriger als das Niveau der Euro-Paletten 3 in der Förderposition der Förderkette 1 ist.

Der benötigte Bauraum für ein derartiges Flurförderfahrzeug 8 ist aufgrund des Aufrollens der Förderkette 12 in ein Magazin 11 äußerst gering. Die Breite des Flurförderfahrzeugs 8 beträgt ungefähr 2700 mm und die Länge für maximal vier Euro-Paletten 3 in der Länge hintereinander ist ungefähr 5900 mm.

Einem Fachmann ist bekannt, wie das Flurförderfahrzeug 8 und die Anschlußübergänge mit einer SPS-Steuerung, z.B. Siemens S7, gemäß dem Stand der Technik, voll automatisiert gebaut werden kann. Das Flurförderfahrzeug 8 besitzt bei einer solchen Ausführungsform Sensoren und Näherungsschalter sowie alle notwendigen elektrischen Antriebe und Steuerschaltungen zur Ausführung der erforderlichen Bewegungen und Rotationen.

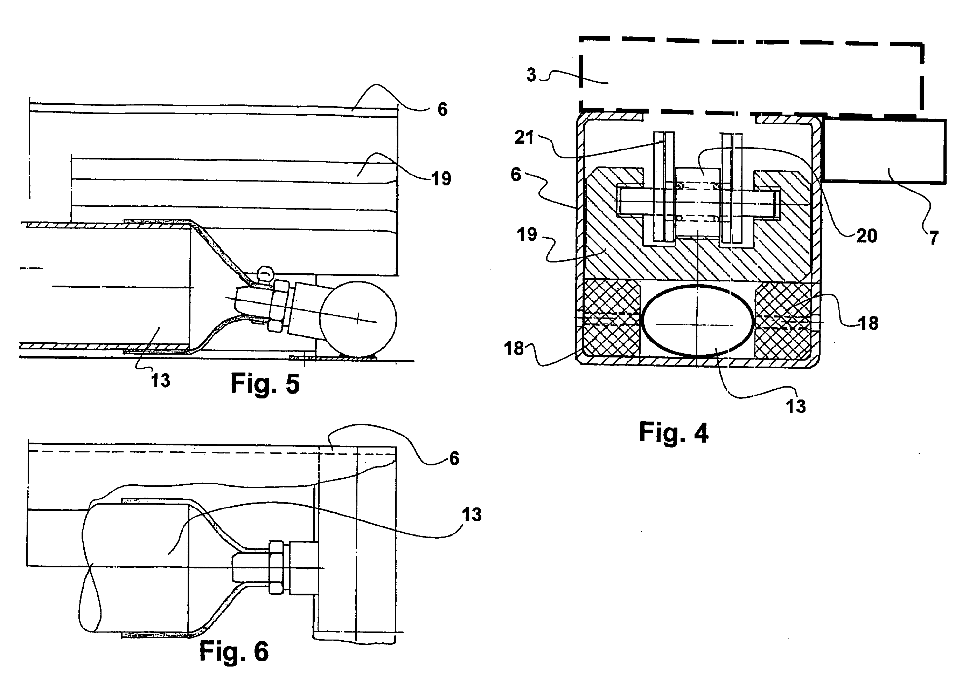

Die Ablageführung 6 ist nach Fig. 4 im Querschnitt gesehen ein Rechteckprofil, das in der oberen Ablageseite eine Öffnung für den Durchtritt der Förderkette 12 aufweist. Unter Vernachlässigung der rechteckigen Form könnte die Ablageführung 6 auch als C-förmig bezeichnet werden. Innerhalb der Ablageführung 6 befindet sich am Boden mittig über der Öffnung der Schlauch 13, der von Standquadern 18 jeweils auf beiden Seiten innerhalb der Ablageführung 6 liegend begrenzt ist. Auf den Standquadern 13 liegt eine Gleitschiene 19, die im Wesentlichen C-förmig ausgebildet ist, wobei die Öffnung nach oben zur Ablageseite gerichtet ist. Sie ist aus Kunststoff, insbesondere Polyethylen, gefertigt und führt verlängerte Achsen der Kettenglieder der Förderkette 12. Die verlängerten Achsen stehen bei beiden seitlichen Kettengliedern etwas hervor, so dass sie in separaten, gegenüberliegenden Nuten in den Gleitschienen 19 geführt werden. In der Mitte jedes Kettenglieds befindet sich eine kugelgelagerte Rolle 20, die auf einer inneren erhöhten, zur C-förmigen Öffnung zentrierten Schiene der Gleitschiene 19 läuft. Auf beiden Seiten der Rolle 20 befindet sich jeweils ein zur nächsten Achse von jeder Rolle 20 verbundenes exzentrisch angeordnetes Tragkettenverbindungsglied 21. Diese Tragkettenverbindungsglieder 21 haben mehrere Funktionen.

Die Euro-Paletten 3 liegen bei der Förderung direkt auf den aus Kunststoff gefertigten Tragkettenverbindungsgliedern 21, die die Rollen 20 zusätzlich führen, indem sie sich über die erhöhte Schiene der Rollen 20 in eigene zur Schiene parallele Nuten herab erstrecken. Schließlich bilden die Tragkettenverbindungsglieder 21 eine Kettengliedfunktion. Die Standquader 18 sorgen dafür, dass der Schlauch 13 im entlasteten Zustand nicht gequetscht wird und somit eine möglichst lange Lebensdauer des Schlauchs 13 erzielt wird.

Wird der Schlauch 13 mit Luft von 5 bar beaufschlagt, so hebt der Schlauch 13 die Gleitschiene 19 mit der Förderkette 12 um maximal 25 mm, wie es in der Fig. 12 gezeigt ist. Die auf den Tragkettenverbindungsgliedern 21 liegenden Euro-Paletten 3 können nun mittels der Rollen 20 auf der Gleitschiene 19 in den Laderaum 4 bzw. aus dem Laderaum 4 rollend und somit mit geringem Kraftaufwand befördert werden. Zur Verbesserung der Gleitfähigkeit beim Hebevorgang sind die seitlichen Gleitflächen der Gleitschiene 19 zur Palettentragseite hin leicht verjüngt abgeschrägt. Der Schlauch 13 gemäß den Fig. 5 und 6 ist vorzugsweise ein standardmäßiger Feuerwehrschlauch und ist deshalb preiswert zu erwerben.

Der Übergang der Förderung von Euro-Paletten 3 vom Flurförderfahrzeug 8 zum Laderaum 4 des Nutzfahrzeuges 5 ist in Fig. 7 dargestellt. Sowohl das Flurförderfahrzeug 8, die Andockbrücke 10 und der Laderaum 4 haben jeweils separate Schläuche 13, die über Druckluft-Schnellkupplungen 22 miteinander verbunden sind. Hierdurch entfällt eine Synchronisierungssteuerung für Druckluftzuführaggregate zwischen dem Flurförderfahrzeug 8 und dem Nutzfahrzeug 5. Ein einziges Druckluftzuführaggregat reicht aus, um die Schläuche 13 in der gesamten Förderlinie in den Ablageführungen 6 mit Druckluft zu versorgen. Das Druckluftzuführaggregat bzw. Druckluftmagnetventile arbeiten mit der Steuerung und Automatisierungselektronik des Flurförderfahrzeuges 8 zusammen, um automatisierte Bewegungsabläufe zu erzielen. Natürlich kann auch ein Nutzfahrzeug 5 ein eigenes Luftdruckaggregat mit Steuerventilen aufweisen, was aber aufgrund der oben beschriebenen Gründe nicht erforderlich ist. Im Weiteren zeigt Fig. 7 die hydraulische Höhenpositionierungsvorrichtung 14 direkt vor der Rampe und am Eingang des Laderaums 4 angreifend. Die Euro-Paletten 3 liegen auf den Tragkettenverbindungsgliedern 21, die mittels der Rollen 20 der Förderkette 12 in den Laderaum 4 hineingerollt oder herausgerollt werden.

Ein größeres Flurförderfahrzeug 8 nach den Fig. 8 und 15 nimmt drei Euro-Paletten 3 der Breite nach auf. In Fig. 9 sind besonders gut die Förderwalzen 17 zur Förderung der Euro-Paletten 3 auf die Ladefläche 16 des Flurförderfahrzeugs 8 zu sehen. Die Förderwalzen sind parallel zur Förderrichtung der Förderkette 12 gerichtet. Die Euro-Paletten 3 werden auf der Ladefläche 16 zwischengelagert, bevor sie durch Verfahren des Flurförderfahrzeugs 8 an den in den Fig. 3 und 14 gezeigten Kettenförderer 24 mittels der Förderwalzen 17 abgegeben werden. Die Fig. 10 zeigt das Antriebsaggregat sowohl von drei parallel angeordneten Förderketten 12 als auch die Antriebsaggregate der Förderwalzen 17, wobei gemäß den Fig. 14, 16 und 17 sechs parallel angeordnete Förderketten 12 vorgesehen sind.

Entsprechend Fig. 11 ist ein Kettenantriebszahnrad 25 zur Umlenkung der Förderkette 12 aus dem Magazin 11 in die Gleitschiene 19 vorgesehen. Die für die Förderkette 12 erste Gleitschiene 19 ist als Weiche 23 ausgebildet, die sich um eine Schwenkachse bewegt, die sich auf einer gemeinsamen Vertikalen mit der parallelen Antriebsachse des Kettenantriebszahnrads 25 der Förderkette 12 befindet. Da das Antriebszahnrad 25 der Förderkette 12 ortsfest angeordnet ist und die Förderkette 12 immer auf einem bestimmten horizontalen Niveau bereitgestellt wird, muß der Hub von ca. 25 mm zwischen der Ablage- und Förderposition ausgeglichen werden. Dies schafft die Weiche 23. Der Schlauch 13 weist eine maximale Druckluftbeaufschlagung auf und die Weiche 23 befindet sich in einer Förderposition der Förderkette 12.

In Fig. 12 ist zu erkennen, wie der Schlauch 13 die Gleitschiene 19 an obere innere Seitenflächen der Ablageflächen der Ablageführung 6 drückt. Die exzentrischen Tragkettenverbindungsglieder 21 tragen in gestrichelter Linie dargestellte Euro-Paletten 3. Die Fig. 12 zeigt die Förderposition, wohingegen die Fig. 3 den konträren Zustand, nämlich die Ablageposition, zeigt.

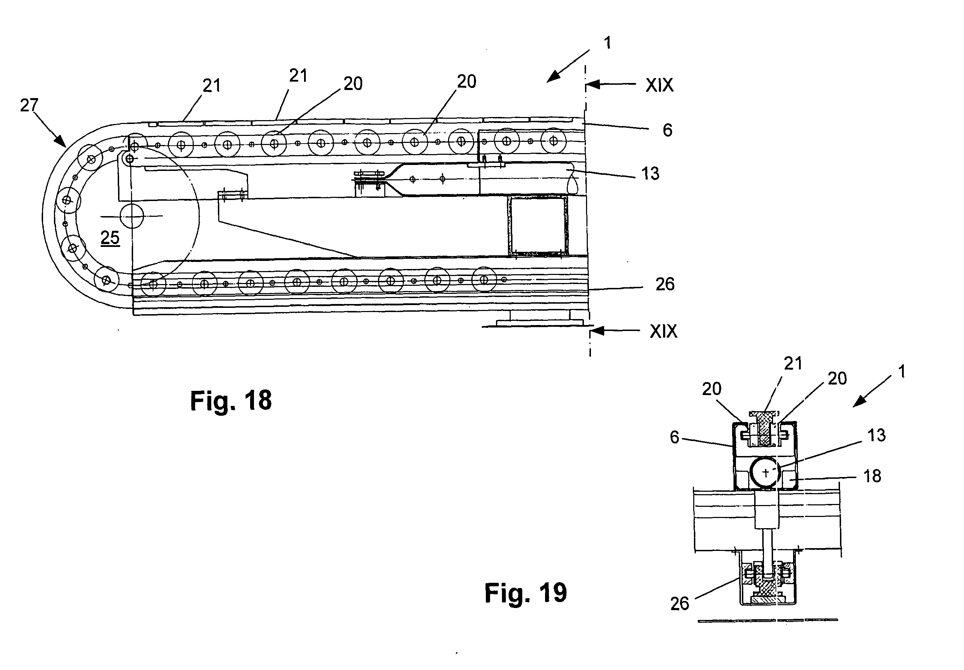

Bei der Vorrichtung 1 nach Fig. 18 verläuft die Förderkette 12 unterhalb der Ablageführung 6 in einer Lagerschiene 26 die als Magazin dient, wobei die Lagerschiene 26 unter Einschluss eines Radius 27 von der Ablageführung 6 abgeht. Im Bereich des Radius 27 ist das Kettenantriebszahnrad 25 vorgesehen.

In Abweichung von der zuvor erläuterten Förderkette 12, ist gemäß Fig. 19 zwischen zwei Rollen 20 ein zur Ablageseite hin exzentrisch angeordnetes Tragkettenverbindungsglied 21 vorgesehen.

### Bezugszeichenliste

- 1.: Vorrichtung zum Be- und Entladen
- 2.: Transportgut
- 3.: Euro-Palette
- 4.: Laderaum
- 5.: Nutzfahrzeug
- 6.: Ablagetührung
- 7.: Zwischenboden
- 8.: Flurförderwagen
- 9.: Laufschienen
- 10.: Andockbrücke
- 11.: Magazin
- 12.: Förderkette
- 13.: Schlauch
- 14.: Hydraulische Höhenpositionierungsvorrichtung
- 15.: Stahlwechselcontainer
- 16.: Ladefläche des Flurförderfahrzeugs
- 17.: Förderwalzen
- 18.: Standquader
- 19.: Gleitschiene
- 20.: Rollen
- 21.: Tragkettenverbindungsglied
- 22.: Druckluft-Schnellkupplungen
- 23.: Weiche
- 24.: Kettenförderer mit Umsetzer
- 25.: Kettenantriebszahnrad
- 26.: Lagerschiene
- 27.: Radius

## Patentansprüche

1. Vorrichtung zum Be- und Entladen von Transportgut (2), insbesondere auf Euro-Paletten (3), in und aus einem Laderaum (4), insbesondere von einem Container (15) oder einem Nutzfahrzeug (5), mit mindestens einer hohlen Ablageführung (6) zur Ablage von Transportgut (2) und zur Führung einer Fördereinrichtung darin sowie mit einem unter der Fördereinrichtung in der Ablageführung (6) angeordneten Schlauch (13), der unter einer Fluidbeaufschlagung die Fördereinrichtung aus einer Ablageposition in eine Förderposition zum Fördern des Transportgutes (2) hebt, wodurch die Fördereinrichtung aus einer mittigen Öffnung der Ablageführung (6) herausragt, **dadurch gekennzeichnet, dass** die Fördereinrichtung eine endliche Förderkette (12) ist und ein Förderkettenantrieb (25) vorgesehen ist, der die Förderkette (12) aus einem Magazin (11) zum Be- und Entladen in die Ablageführung (6) hinein- und herausführt.

2. Vorrichtung nach Anspruch 1, **dadurch gekennzeichnet, dass** die Förderkette (12) Rollen (20), die auf Gleitschienen (19) in der Ablageführung (6) laufen, aufweist, wobei zum Fördern des Transportguts (2) mindestens ein zur Ablageseite hin exzentrisch angeordnetes Tragkettenverbindungsglied (21) vorgesehen ist.

3. Vorrichtung nach Anspruch 1 oder 2, **dadurch gekennzeichnet, dass** die Förderkette (12) aus einem Kunststoff gefertigt ist.

4. Vorrichtung nach Anspruch 1, **dadurch gekennzeichnet, dass** die Vorrichtung (1) als Flurförderfahrzeug (8) auf Laufschienen (9) ausgebildet ist, die quer zur Bewegungsrichtung der Förderkette (12) angeordnet sind.

5. Vorrichtung nach einem der Ansprüche 1 bis 4, **dadurch gekennzeichnet, dass** eine Gleitschiene (19) zur Führung der Förderkette (12) mit einer zur Antriebsachse des Kettenantriebs (24) der Förderkette (12) vertikal ausgerichteten Schwenkachse angeordnet ist.

6. Vorrichtung nach einem der Ansprüche 1 bis 5, **dadurch gekennzeichnet, dass** Förderwalzen (17) in Längsrichtung zur Förderrichtung der Förderkette (12) angeordnet sind, um das Transportgut (2) quer zur Förderrichtung der Förderkette (12) zu fördern.

7. Vorrichtung nach einem der Ansprüche 1 bis 6, **dadurch gekennzeichnet, dass** eine Andockbrücke (10) mit mindestens zwei Ablageführungen (6) vorgesehen ist.

8. Vorrichtung nach einem der Ansprüche 1 bis 7, **dadurch gekennzeichnet, dass** eine hydraulische Höhenpositionierungsvorrichtung (14) an der Entladeseite des Laderaums (4) vorgesehen ist.

9. Vorrichtung nach einem der Ansprüche 1 bis 8, **dadurch gekennzeichnet, dass** das Magazin (11) eine Lagerschiene (26) für die Förderkette (12) umfasst, die unter Einschluss eines Radius (27) von der Gleitschiene (19) abgeht.

10. Vorrichtung nach Anspruch 9, **dadurch gekennzeichnet, dass** die Lagerschiene (26) unterhalb der Gleitschiene (19) verläuft und beabstandet zu dieser angeordnet ist.

11. Vorrichtung nach Anspruch 9 oder 10, **dadurch gekennzeichnet, dass** die Lagerschiene (26) meanderförmig gebogen ist.

12. Ablageführung für einen Laderaum (4), insbesondere von einem Container (15), einem Nutzfahrzeug (5) oder für die Vorrichtung (1) nach einem der Ansprüche 1 bis 11, mit einem in der Ablageführung (6) angeordneten Schlauch (13) und einer darauf liegenden Gleitschiene (19) zum Führen der Fördereinrichtung (12), **dadurch gekennzeichnet, dass** die Gleitschiene (19) im Wesentlichen C-förmig ausgebildet ist.

13. Boden für einen Laderaum (4) mit mindestens zwei parallel angeordneten Ablageführungen (6) nach Anspruch 12 **dadurch gekennzeichnet, dass** zwischen den Ablageführungen (6) zur Oberkante der Ablageführungen (6) fluchtend ausgerichtet ein Zwischenboden (7), insbesondere aus Holz, angeordnet ist.

14. Verfahren zum Be- und Entladen von Transportgut (2), insbesondere Euro-Paletten (3) in und aus einem Laderaum (4), insbesondere von einem Container (15) oder einem Nutzfahrzeug (5), wobei eine Fördereinrichtung durch Fluidbeaufschlagung eines unter der Fördereinrichtung angeordneten Schlauchs (13) gehoben wird, um das Transportgut (2) zu fördern, **dadurch gekennzeichnet, dass** das Transportgut (2) auf der als endliche Förderkette (12) ausgebildeten Fördereinrichtung (12) in oder aus dem Laderaum hinein oder heraus gerollt wird, indem die Förderkette (12) von einer Trommel als Magazin (11) ab- bzw. aufgerollt wird.
